# FASCICULE DE BREVET EUROPEEN

(11) **EP 3 891 049 B1**
(45) Date de publication et mention de la délivrance du brevet: **13.03.2024**
(21) Numéro de dépôt: 19832168.9
(22) Date de dépôt: 19.11.2019
(51) Int. Cl.: B62D 25/00, B62D 25/08, B62D 27/02

(54) **AMÉNAGEMENT DE TÔLERIES POUR PRÉVENIR UNE COULURE DE LIQUIDE DE CATAPHORÈSE DANS UNE GOUTTIÈRE D'ENTRÉE DE VOLET**
ANORDNUNG VON BLECHEN ZUR VERHINDERUNG DER EINSTRÖMUNG EINER KATAPHORETISCHEN FLÜSSIGKEIT IN EINE KLAPPENÖFFNUNGSRINNE
ARRANGEMENT OF METAL SHEETS TO PREVENT CATAPHORESIS LIQUID FLOWING INTO A FLAP OPENING GUTTER

(30) Priorité: 06.12.2018 FR 1872411
(43) Date de publication de la demande: 13.10.2021
(73) Titulaire: Stellantis Auto SAS, 78300 Poissy (FR)
(72) Inventeur: LEGEARD, Vincent, 95740 Frepillon (FR); RIVIERRE, Laurent, 75015 Paris (FR); CHIUMENTI, Olivier, 28260 GILLES (FR)
(86) Numéro de dépôt international: PCT/FR2019/052741
(87) Numéro de publication internationale: WO 2020/115381

(56) Documents cités:
- FR-A1- 2 375 081
- FR-B1- 2 926 055
- GB-A- 2 072 588
- US-A- 4 982 994

## Description

### Domaine technique

La présente invention revendique la priorité de la demande française 1872411 déposée le 6 décembre 2018.

L'invention a trait au domaine de l'assemblage de structures et plus particulièrement à une carrosserie de véhicule automobile.

### Technique antérieure

Le document de brevet publié FR 2 926 055 B1 divulgue un passage entre deux panneaux de carrosserie soudés formant une évacuation de liquide de cataphorèse. Le dispositif connu est adapté pour des emboutis s'étendant verticalement. Une surface verticale se prête bien au drainage de liquide. Cependant, une structure de carrosserie comprenant deux emboutis ayant une jonction commune sensiblement horizontale a tendance à accumuler du liquide de cataphorèse après un bain de cataphorèse (traitement anticorrosion).

Le document US 4 982 994 A divulgue en outre une carrosserie comprenant les caractéristiques du préambule de la revendication indépendante 1.

### Exposé de l'invention

L'invention a pour objectif de pallier au moins un des inconvénients de l'état de la technique susmentionné. Plus particulièrement, l'invention a pour objectif de réduire le risque de coulure.

L'invention a pour objet une carrosserie de véhicule automobile, comprenant :
un premier embouti avec une bordure de jonction et une portion verticale, ou inclinée vers le bas, adjacente à la bordure via une portion formant un pli ; un deuxième embouti avec une bordure longitudinale de jonction, la bordure étant superposée de manière horizontale à la bordure de jonction du premier embouti ; remarquable en ce que la bordure de jonction du deuxième embouti présente un bord transversal sur la bordure de jonction du premier embouti, le bord étant en retrait par rapport à la portion formant un pli du premier embouti.

La bordure de jonction du premier embouti s'étend transversalement à la bordure de jonction du deuxième embouti, et présente un bord longitudinal opposé à la portion formant un pli, la bordure de jonction du deuxième embouti présentant une découpe en dehors d'une zone de superposition de la bordure sur la bordure de jonction du premier embouti, la découpe étant adjacente au bord longitudinal.

Selon un mode avantageux de l'invention, le retrait du bord transversal de la bordure de jonction du deuxième embouti est supérieur à 3mm.

Selon un mode avantageux de l'invention, le deuxième embouti comprend un ressaut relié à la bordure de jonction de l'embouti, par un pli du deuxième embouti.

Selon un mode avantageux de l'invention, la découpe s'étend depuis un bord de la bordure de jonction du deuxième embouti jusqu'au pli du deuxième embouti.

Selon un mode avantageux de l'invention, la bordure de jonction du premier embouti forme un ressaut épousant le ressaut du deuxième embouti, la bordure présentant une largeur réduite au niveau du ressaut de la bordure de jonction du deuxième embouti.

Selon un mode avantageux de l'invention, la bordure de jonction du premier embouti présente une largeur qui diminue sur une zone superposée par la bordure de jonction du deuxième embouti, en direction du ressaut de la bordure de jonction du deuxième embouti.

Selon un mode avantageux de l'invention, la bordure de jonction du deuxième embouti présente une augmentation de hauteur en direction du premier embouti.

Selon un mode avantageux de l'invention, le premier embouti est une gouttière d'entrée de volet de coffre arrière et le deuxième embouti est un côté d'habitacle.

Les mesures de l'invention sont intéressantes en ce qu'elles permettent de ne plus avoir de coulure de liquide de cataphorèse dans la gouttière d'entrée de volet de coffre arrière. Les mesures permettent aussi de réduire le jeu au niveau de jonctions entre emboutis et donc de limiter le volume de possibles poches de rétention de liquide de cataphorèse formées entre des bordures de jonction. De plus, elles permettent d'améliorer le drainage du liquide de cataphorèse. En outre, elles réduisent les coûts de retouches. Enfin, elles améliorent la qualité en assurant un produit conforme dès sa réalisation.

D'autres caractéristiques et avantages de la présente invention seront mieux compris à l'aide de la description et du dessin.

### Brève description du dessin

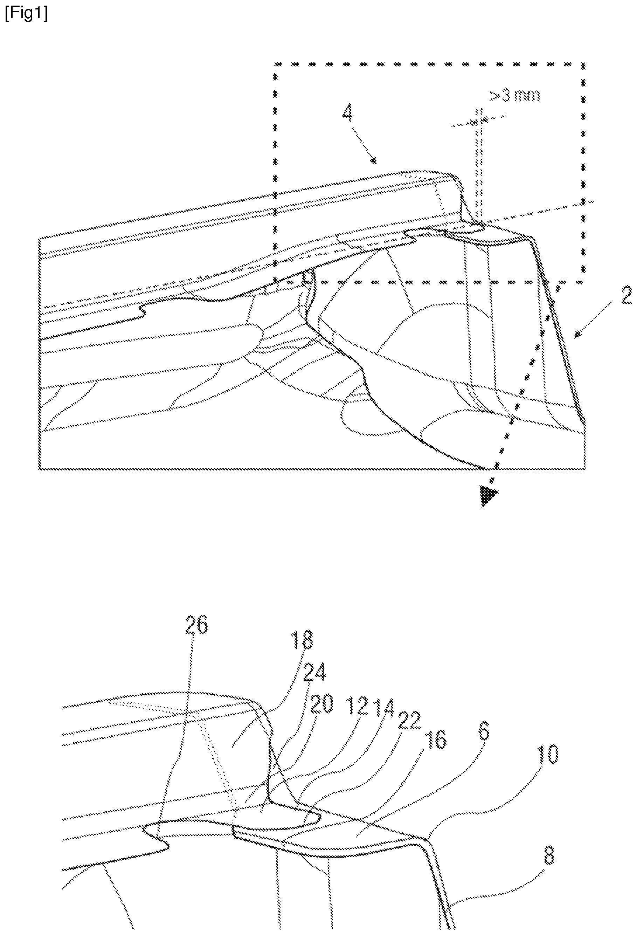

[Fig1] est une vue de l'aménagement de tôleries selon l'invention.

### Description détaillée

La figure représente un premier embouti 2 et un deuxième embouti 4. Le premier embouti 2 et le deuxième embouti 4 peuvent être respectivement une gouttière d'entrée de volet de coffre arrière 2 et un côté d'habitacle 4 au niveau du coin arrière d'un pavillon (qui n'est pas représenté). La figure illustre une partie supérieure arrière latérale de la carrosserie d'un véhicule automobile.

La figure comprend en outre un zoom (partie inférieure de la figure) sur la zone de jonction entre la gouttière d'entrée de volet 2 et le côté d'habitacle 4. La gouttière d'entrée de volet 2 comprend une bordure 6 de jonction et une portion sensiblement verticale 8, adjacente à la bordure 6 via une portion 10 formant un pli. Le côté d'habitacle 4 comprend une bordure 12 longitudinale de jonction, la bordure 12 étant superposée de manière horizontale à la bordure 6 de jonction de la gouttière d'entrée de volet 2. La bordure 12 de jonction du côté d'habitacle 4 présente un bord transversal 14 sur la bordure 6 de jonction de la gouttière d'entrée de volet 2. Le bord transversal 14 est en retrait par rapport à la portion 10 formant un pli de la gouttière d'entrée de volet 2. Le retrait du bord transversal 14 de la bordure 12 de jonction du côté d'habitacle 4 est supérieur à 3 mm. Ainsi, une zone de superposition de la bordure 12 de jonction du côté d'habitacle 4 sur la bordure 6 de jonction de la gouttière d'entrée de volet 2 est réduite au strict nécessaire pour la réalisation d'un point de soudure.

La bordure 6 de jonction de la gouttière d'entrée de volet 2 s'étend transversalement à la bordure 12 de jonction du côté d'habitacle 4. La bordure 6 de jonction de la gouttière d'entrée de volet 2 présente un bord longitudinal 16 opposé à la portion 10 formant un pli. La bordure 12 de jonction du côté d'habitacle 4 présente une découpe 26 en dehors de la zone de superposition de la bordure 12 sur la bordure 6 de jonction de la gouttière d'entrée de volet 2. La découpe 26 est adjacente au bord longitudinal 16.

Le côté d'habitacle 4 comprend un ressaut 18 relié à la bordure 12 de jonction du côté d'habitacle 4, par un pli 20. La découpe 26 s'étend depuis un bord 22 de la bordure 12 de jonction du côté d'habitacle 4 jusqu'au pli 20.

La bordure 6 de jonction de la gouttière d'entrée de volet 2 forme un ressaut 24 épousant le ressaut 18 du côté d'habitacle 4. La bordure 6 de jonction de la gouttière d'entrée de volet 2 présente une largeur réduite au niveau du ressaut 18 de la bordure 12 de jonction du côté d'habitacle 4.

La bordure 6 de jonction de la gouttière d'entrée de volet 2 présente une largeur qui diminue sur une zone superposée par la bordure 12 de jonction du côté d'habitacle 4, en direction du ressaut 18 de la bordure 12 de jonction du côté d'habitacle 4.

La bordure 12 de jonction du côté d'habitacle 4 présente une augmentation de hauteur en direction de la gouttière d'entrée de volet 2.

## Revendications

1. Carrosserie de véhicule automobile, comprenant :
- un premier embouti (2) avec une bordure (6) de jonction et une portion verticale (8), ou inclinée vers le bas, adjacente à la bordure (6) via une portion (10) formant un pli ;
- un deuxième embouti (4) avec une bordure (12) longitudinale de jonction, la bordure (12) étant superposée de manière horizontale à la bordure (6) de jonction du premier embouti (2) ;
la bordure (12) de jonction du deuxième embouti (4) présente un bord transversal (14) sur la bordure (6) de jonction du premier embouti (2), ledit bord (14) étant en retrait par rapport à la portion (10) formant un pli du premier embouti (2), la bordure (6) de jonction du premier embouti (2) s'étendant transversalement à la bordure (12) de jonction du deuxième embouti (4), **caractérisée en ce que** la bordure (6) de jonction du premier embouti (2) présente un bord longitudinal (16) opposé à la portion (10) formant un pli, la bordure (12) de jonction du deuxième embouti (4) présentant une découpe (26) en dehors d'une zone de superposition de ladite bordure (12) sur la bordure (6) de jonction du premier embouti (2), la découpe (26) étant adjacente audit bord longitudinal (16).

2. Carrosserie selon la revendication 1, **caractérisée en ce que** le retrait du bord transversal (14) de la bordure (12) de jonction du deuxième embouti (4) est supérieur à 3 mm.

3. Carrosserie selon la revendication 1 ou 2, **caractérisée en ce que** le deuxième embouti (4) comprend un ressaut (18) relié à la bordure (12) de jonction dudit embouti (4) par un pli (20) du deuxième embouti (4).

4. Carrosserie selon la revendication 3, **caractérisée en ce que** la découpe (26) s'étend depuis un bord (22) de la bordure (12) de jonction du deuxième embouti (4) jusqu'au pli (20) du deuxième embouti (4).

5. Carrosserie selon l'une des revendications 3 à 4, **caractérisée en ce que** la bordure (6) de jonction du premier embouti (2) forme un ressaut (24) épousant le ressaut (18) du deuxième embouti (2), ladite bordure (6) présentant une largeur réduite au niveau du ressaut (18) de la bordure (12) de jonction du deuxième embouti (4).

6. Carrosserie selon la revendication 5, **caractérisée en ce que** la bordure de jonction (6) du premier embouti (2) présente une largeur qui diminue sur une zone superposée par la bordure (12) de jonction du deuxième embouti (4), en direction du ressaut (18) de la bordure (12) de jonction du deuxième embouti (4).

7. Carrosserie selon l'une des revendications 1 à 6, **caractérisée en ce que** la bordure (6) de jonction du deuxième embouti (4) présente une augmentation de hauteur en direction du premier embouti (2).

8. Carrosserie selon l'une des revendications 1 à 7, **caractérisée en ce que** le premier embouti (2) est une gouttière d'entrée de volet de coffre arrière (2) et le deuxième embouti (4) est un côté d'habitacle (4).

## Patentansprüche

1. Kraftfahrzeugkarosserie mit:
- ein erstes Prägestück (2) mit einem Verbindungsrand (6) und einem vertikalen Abschnitt (8) oder einem nach unten geneigten Abschnitt, der über einen faltenbildenden Abschnitt (10) an den Rand (6) angrenzt;
- ein zweites Prägestück (4) mit einem länglichen Anschlussrand (12), wobei der Anschlussrand (12) horizontal über dem Anschlussrand (6) des ersten Prägestücks (2) liegt;
der Verbindungsrand (12) des zweiten Prägestempels (4) hat einen transversalen Rand (14) an dem Verbindungsrand (6) des ersten Prägestempels (2), wobei der Rand (14) in Bezug auf den Teil (10) zurückgesetzt ist, der eine Falte des ersten Prägestempels (2) bildet, wobei der Verbindungsrand (6) des ersten Prägestempels (2) sich quer zu dem Verbindungsrand (12) des zweiten Prägestempels (4) erstreckt, **dadurch gekennzeichnet, dass** der Verbindungsrand (6) des ersten Prägestempels (2) einen gegenüberliegenden Längsrand (16) aufweist Am Falzabschnitt (10) weist der Verbindungsrand (12) des zweiten Prägestempels (4) einen Ausschnitt (26) außerhalb eines Überlagerungsbereichs des genannten Randes (12) am Verbindungsrand (6) des ersten Prägestempels (2) auf, wobei der Ausschnitt (26) an den genannten Längsrand (16) angrenzt.

2. Karosserie nach Anspruch 1, **dadurch gekennzeichnet, dass** der Rückzug des Querrandes (14) des Verbindungsrandes (12) des zweiten Prägestempels (4) größer als 3 mm ist.

3. Karosserie nach Anspruch 1 oder 2, **dadurch gekennzeichnet, dass** das zweite Prägestempel (4) einen Vorsprung (18) umfasst, der mit dem Verbindungsrand (12) des Prägestempels (4) durch eine Falte (20) des zweiten Prägestempels (4) verbunden ist.

4. Aufbau nach Anspruch 3, **dadurch gekennzeichnet, dass** sich der Ausschnitt (26) von einem Rand (22) des Verbindungsrandes (12) des zweiten Prägestempels (4) bis zur Falte (20) des zweiten Prägestempels (4) erstreckt.

5. Aufbau nach einem der Ansprüche 3 bis 4, **dadurch gekennzeichnet, dass** der Verbindungsrand (6) des ersten Ziehstempels (2) einen Vorsprung (24) bildet, der sich an den Vorsprung (18) des zweiten Ziehstempels (2) anschmiegt, wobei der Rand (6) eine verringerte Breite im Bereich des Vorsprungs (18) des Verbindungsrandes (12) des zweiten Ziehstempels (4) aufweist.

6. Aufbau nach Anspruch 5, **dadurch gekennzeichnet, dass** der Verbindungsrand (6) des ersten Ziehstempels (2) eine Breite aufweist, die sich über einen Bereich, der durch den Verbindungsrand (12) des zweiten Ziehstempels (4) überlagert wird, in Richtung des Vorsprungs (18) des Verbindungsrandes (12) des zweiten Ziehstempels (4) verringert.

7. Karosserie nach einem der Ansprüche 1 bis 6, **dadurch gekennzeichnet, dass** der Verbindungsrand (6) des zweiten Ziehstempels (4) eine Höhenerhöhung in Richtung des ersten Ziehstempels (2) aufweist.

8. Karosserie nach einem der Ansprüche 1 bis 7, **dadurch gekennzeichnet, dass** das erste Ansatzstück (2) eine hintere Kofferraumklappen-Eintrittsrinne (2) und das zweite Ansatzstück (4) eine Fahrgastraumseite (4) ist.

## Claims

1. Motor vehicle bodywork, comprising:
- a first stamped portion (2) with a joining edge (6) and a vertical portion (8), or inclined downwards, adjacent to the edge (6) via a portion (10) forming a fold ;
- a second press-formed portion (4) with a longitudinal joining edge (12), the edge (12) being superposed horizontally on the joining edge (6) of the first press-formed portion (2);
the joining edge (12) of the second press-formed part (4) has a transverse edge (14) on the joining edge (6) of the first press-formed part (2), said edge (14) being set back with respect to the portion (10) forming a fold of the first press-formed part (2), the joining edge (6) of the first press-formed part (2) extending transversely to the joining edge (12) of the second press-formed part (4), **characterized in that** the joining edge (6) of the first press-formed part (2) has a longitudinal edge (16) opposite to one another the portion (10) forming a fold, the joining edge (12) of the second stamped portion (4) having a cutout (26) outside a zone of superposition of said edge (12) on the joining edge (6) of the first stamped portion (2), the cutout (26) being adjacent to said longitudinal edge (16).

2. Bodywork according to claim 1, **characterized in that** the shrinkage of the transverse edge (14) of the joining edge (12) of the second stamped part (4) is greater than 3 mm.

3. Bodywork according to claim 1 or 2, **characterized in that** the second stamped portion (4) comprises a projection (18) connected to the joining edge (12) of the said stamped portion (4) by a fold (20) of the second stamped portion (4).

4. Bodywork according to claim 3, **characterized in that** the cutout (26) extends from an edge (22) of the joining edge (12) of the second stamped portion (4) to the fold (20) of the second stamped portion (4).

5. Bodywork according to one of claims 3 to 4, **characterized in that** the joining edge (6) of the first stamped portion (2) forms a projection (24) matching the projection (18) of the second stamped portion (2), the said edge (6) having a reduced width at the level of the projection (18) of the joining edge (12) of the second stamped portion (4).

6. Bodywork according to claim 5, **characterized in that** the joining edge (6) of the first stamped portion (2) has a width which decreases over a zone superposed by the joining edge (12) of the second stamped portion (4), in the direction of the projection (18) of the joining edge (12) of the second stamped portion (4).

7. Bodywork according to one of claims 1 to 6, **characterized in that** the joining edge (6) of the second stamped portion (4) has an increase in height in the direction of the first stamped portion (2).

8. Bodywork according to one of claims 1 to 7, **characterized in that** the first stamped portion (2) is an inlet gutter for the rear trunk flap (2) and the second stamped portion (4) is a passenger compartment side (4).
